(19) **Europäisches Patentamt / European Patent Office / Office européen des brevets**

(11) **EP 1 544 431 B1**

(12) **EUROPEAN PATENT SPECIFICATION**

(45) Date of publication and mention of the grant of the patent:
**24.01.2007 Bulletin 2007/04**

(51) Int Cl.:
**F01N 11/00** *(2006.01)*

(21) Application number: **03104700.4**

(22) Date of filing: **15.12.2003**

(54) **Method for estimation of the catalyst efficiency loss**

Verfahren zur Schätzung des Wirkungsgradverlustes eines Katalysators

Procédé pour la estimation de la perte d'efficacité d'un catalyseur

(84) Designated Contracting States:
**DE FR GB**

(43) Date of publication of application:
**22.06.2005 Bulletin 2005/25**

(73) Proprietor: **Ford Global Technologies, LLC, A subsidary of Ford Motor Company Dearborn, MI 48126 (US)**

(72) Inventors:
- **Yacoub, Yasser Mohammed Sayed 50858, Köln (DE)**
- **Chigapov, Albert 52072, Aachen (DE)**
- **Dubkov, Alexei 52064, Aachen (DE)**
- **Carberry, Brendan 52074 Aachen (DE)**

(74) Representative: **Drömer, Hans-Carsten et al Ford-Werke Aktiengesellschaft, Patentabteilung NH/DRP, Henry-Ford-Strasse 1 50725 Köln (DE)**

(56) References cited:
**EP-A- 0 786 586**     **US-A- 5 896 743**

- **PATENT ABSTRACTS OF JAPAN vol. 1995, no. 08, 29 September 1995 (1995-09-29) & JP 07 119447 A (NIPPONDENSO CO LTD), 9 May 1995 (1995-05-09)**

**EP 1 544 431 B1**

**Description**

The present invention relates to a method of estimating the efficiency of a catalyst located in the exhaust path and/or downstream of an internal combustion engine. More particularly, the present invention is focused on a method of predicting the efficiency of an automotive catalyst, based on temperatures seen by a catalyst in its use for on-board diagnostics. More in details, the present invention relates to diesel automotive applications, in which one or more catalysts are installed in the exhaust system upstream of the diesel particulate filter, and in which heat that is necessary for filter regeneration, is generated periodically by means of fuel combustion inside the engine manifold and/or over the catalyst(s).

A method of monitoring a catalyst using a lifetime temperature profile is disclosed in the US 5,896,743. The US 5,896,743 also relates to a monitor for measuring the efficiency of a catalyst located in an exhaust path of an internal combustion engine. The monitor comprising:

a resistive type oxygen sensor positioned in the exhaust path between the engine and the catalyst, the oxygen sensor detecting oxygen concentration of engine emissions;
a temperature sensor positioned proximate to the catalyst for generally, continuously monitoring catalyst temperature;
means for receiving the catalyst temperature from the temperature sensor and generating a lifetime temperature profile and a catalyst light off time;
a first comparator for comparing a magnitude of the detected oxygen concentration to a predetermined threshold level;
a second comparator for receiving the catalyst light off time and comparing the light off time to a predetermined light off time;
a third comparator for receiving the lifetime temperature profile and comparing the lifetime temperature profile to a predetermined temperature profile threshold limit.

As mentioned above, the US 5,896,743 relates to a method of measuring the efficiency of a catalyst located in the exhaust path of an internal combustion engine, comprising the steps of:

measuring a concentration of engine emissions with an oxygen sensor positioned in the exhaust path between the engine and the catalyst;
detecting a magnitude of the resistance of the oxygen sensor;
comparing the magnitude of the resistance to a predetermined threshold limit;
detecting a temperature of the catalyst with a temperature sensor positioned proximate to the catalyst;
determining a light off time of the catalyst using the detected catalyst temperature;
comparing the determined light off time with a predetermined light off time limit;
generating a lifetime temperature profile with the measured catalyst temperature; and
comparing the lifetime temperature profile with a predetermined temperature profile threshold limit.

According to this cited method, time events at which the catalyst temperature exceeds the predetermined limit (800°C) are counted with different weighing factors depending on a temperature level, thus generating a lifetime temperature profile of the catalyst allowing to estimate the efficiency of a catalyst.

In some investigations, sintering was found to be the one of the primary mechanisms of deactivation of catalysts operating at elevated temperatures. The uniform approach quantifying catalyst thermal ageing in terms of sintering can be applied to both metal oxide catalysts silica, alumina etc. (H.Schaper, E.B.M. Doesburg, L.L. van Reijen; Appl. Catal., 7 (1983)211; A.F. Lindstrom et al. Combustion of methane over Pd-Al2O3/Sio2 catalyst, catalyst activity and stability; Applied Catalysis A: General, 153, 157-175 (1997)) and supported metal catalysts such as supported noble metal catalysts (E. Ruckemstein et al. Growth kinetics and the size distributions of supported metal crystallites, J.Catal., 29, 224-45 (1973); P.C. Flynn et al. A model of supported metal catalyst sintering. I. Development of model, and II. Application of model, ibid., 34,390 - 410 (1974)).

The US 6,363,713 B1 discloses an on-board diagnostic method for a diesel emission control system including a catalyst and a fuel injection system for periodically injecting controlled amounts of diesel fuel into the exhaust stream of the diesel engine to enhance catalytic reduction of NOx, comprising a sequence of the following steps:

determining a catalyst light off temperature;
energizing an indicator to indicate a malfunction of said fuel injection system if the catalyst light off temperature is less than the light off temperature for a fully aged catalyst that just fails to meet the emission standards (FLT) and AR(T2) is then MR where,
MR is a number between 0,5 and 1,
AR(T2) is the average of R(T)@T,
R(T) is the ratio of $\Delta T(T)/T\Delta T$,

ΔT(T) is the difference between the measured post catalyst temperature,
PT(T), and predicted post catalyst temperature, PPT(T), at T, and a delay time, dt, assuming no fuel injection, and
TΔT is the exotherm or theoretical temperature rise.

The EP 1 084 331 B1 relates to a method for monitoring the ability of a catalyst arranged in the exhaust duct of an internal combustion engine, in which a first variable, which is characteristic of the temperature of the catalyst, and a second variable, which is characteristic of the degree of conversion of the catalyst and is dependent on the first variable, are determined by continuous measurements during a heating-up phase of the catalyst, and a change in the dependence of the second variable on the first variable is caused by ageing of the catalyst is used to monitor the ability function of the catalyst.

The EP 0 756 071 B1 relates to a device for determining the abnormal degree of deterioration of catalyst of a catalytic converter arranged in an internal combustion engine exhaust system, comprising:

measuring means for measuring a temperature of said catalyst;
assuming means for assuming a temperature of said catalyst on the basis of the engine operating condition;
calculating means for calculating a ratio of a varying value of the measured temperature by said measuring means to a varying value of the assumed temperature by said assuming means; and
determining means for determining that the degree of deterioration of said catalyst is abnormal when said ratio is smaller than a predetermined value.

JP 07119447 A discloses, that based on the temperature of a leans NO catalyst, a deterioration factor is calculated and integrated at intervals of 10 seconds to execute processing for updating the degree of deterioration. From a non-volatile memory, the degree of deterioration is read and an $O_2$ feedback condition is varied, so that an operation region on which feedback control, is applied in a stoichiometric amount of air is widen and a lean burn region is narrowed. As a result, a region where NOx is purified by a three dimensional catalyst is widened on the whole of running and through a fuel consumption is slightly increased, an amount of NOx discharged in the atmosphere air on the whole of running shall be prevented.

EP 0 786 586 A2 relates to a device for evaluating performance deterioration of an exhaust gas purifying catalyst, comprising:

temperature detecting means arranged in an exhaust passage for detecting a temperature of an exhaust gas purifying catalyst,

oxygen concentration detecting means arranged in the exhaust passage for detecting a concentration of oxygen contained in an exhaust gas,

calculating means for calculating a degree of catalyst performance deterioration in a pre determined period on the basis of the temperature of the catalyst detected by said temperature detecting means and the concentration of oxygen detected by said oxygen concentration detecting means;

accumulating means for cumulatively adding the degree of catalyst performance deterioration in said predetermined period to obtain an accumulated value; and

evaluating means for evaluating the catalyst performance deterioration on the basis of the accumulated value.

An object of the present invention is, to provide a better method for monitoring a status of a catalyst, which allows to more precisely evaluating a degree of the thermal ageing of the catalyst (or a degree of the catalyst performance that is still available for exhaust gas after-treatment).

According to the present invention, there is provided a method of estimating the efficiency of a catalyst located in the exhaust path and/or downstream of an internal combustion engine comprising the steps of:

- monitoring a temperature of the catalyst with at least one temperature sensor over the catalyst operating time;
- calculating an accumulative exposure of the catalyst to thermal ageing conditions with the measured catalyst temperature;
- applying a predetermined correlation between the accumulative exposure of the catalyst to the thermal ageing conditions and characteristic of the catalyst performance to estimate the catalyst properties;
- comparing the accumulative exposure of the catalyst to thermal ageing conditions to a predetermined threshold limit of the thermal ageing conditions,

- performing indicative measures in case if the actual value of the accumulative exposure of the catalyst to thermal ageing conditions reached and/or exceeded the pre-determined fraction of the pre-determined threshold value, whereby

the acumulated exposure of the catalyst to thermal ageing conditions (denoted as TAI, "thermal ageing index") is calculated using the equation:

$$TAI = \Sigma_i[e^{(-E/RT_i)} * \Delta t_i]$$

whereby E/R=activation energy of the sintering process; $T_i$=catalyst temperature over the i-th time interval over the catalyst lifetime and $\Delta t_i$ = length of the i-th interval over catalyst lifetime.

The present invention provides a method for estimating the efficiency of a catalyst located in an exhaust path and/or manifold of an internal combustion engine.

The method of the present invention is based on the assumption that the loss of the efficiency of the high-temperature automotive catalyst is caused, primarily, by thermal ageing.

With the parameters of the catalyst temperature recorded with uniform and small time increment over the life of the catalyst, the catalyst efficiency loss can be predicted with high accuracy.

With the use of an accurate exhaust gas temperature sensor and/or implied virtual temperature sensor, and knowing a time on-line and/or time on-line during which the catalyst is operated at temperatures above a predetermined threshold temperature, a value of the accumulative exposition of a catalyst to thermal ageing conditions i.e. a thermal ageing index can be calculated using equation describing the ageing of the catalyst.

Based on the pre-measured correlation between the thermal ageing index and the efficiency of the catalyst, the threshold limiting value of the thermal ageing index is known which corresponds to the threshold (minimally accepted) catalyst efficiency, and also a functional dependence of catalyst efficiency on the thermal ageing index is known.

Comparing the actual value and the known threshold value of the thermal ageing index, or applying the pre-determined functional correlation between thermal ageing index and catalyst properties as catalyst efficiency, actual catalyst efficiency, or catalyst efficiency loss, or percentage of the catalyst efficiency (resources) left can be accurately estimated.

The present invention will be more fully understood from the description of preferred embodiments of the invention set forth below, together within the accompanying drawings and tables.

In the drawings:

Fig. 1     is a typical temperature history of a catalyst during ageing,

Fig. 2     is a correlation between Platinum dispersion and thermal ageing index measured for catalyst C2;

Fig. 3     is a correlation between thermal ageing index and tailpipe CO emissions measured over NEDC;

Fig. 4     is an illustration of thermal input correspondence to different ageing conditions.

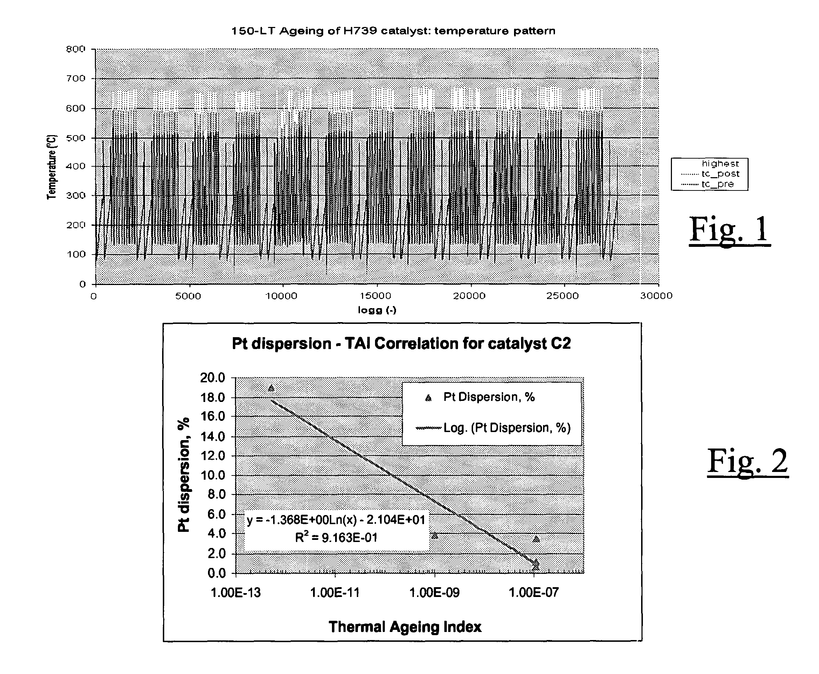

Abbreviations used in Figures 1-4

Fig.1
highest - highest temperature recorded inside catalyst, °C
tc_post - temperature post catalyst, °C
tc_pre - temperature pre catalyst, °C

Fig.2
TAI - Thermal Ageing Index, see text
Pt Dispersion - dispersion of platinum

Fig.3
TAI - Thermal Ageing Index, see text
TP CO NEDC, g/km - tail pipe CO emissions with the given catalyst measured over New European Drive Cycle (NEDC) on a vehicle;

Fig.4
TAI - Thermal Ageing Index, see text
Abbreviations used in Tables 1-5

Table 1.
D(Pt) XRD, A° - average size of the Pt crystallites measured by X-ray diffraction
Dav TEM, A - average size of the Pt crystallites measured by Transmission
Electron Microscopy (TEM)
PtD, % - Pt dispersion measured by CO chemisorption
Sbet, m2/g WC - specific surface area of the wash-coat (WC) measured by
B.E.T. method
Vμ, cm3/g WC - volume of micro pores of the wash-coat (WC) measured by
B.E.T. method
Vs, cm3/g WC - volume of micro pores of the wash-coat (WC) measured by
B.E.T. method

Table 2
(-)Shift in T(50%)CO, °C - negative shift in temperature of 50% CO conversion in the light-off test performed on the engine dynamometer;
TP CO NEDC, g/km - tail pipe CO emissions with the given catalyst measured over New European Drive Cycle (NEDC) on a vehicle;
x(CO) NEDC, % - CO conversion over the given catalyst measured over New European Drive Cycle (NEDC) on a vehicle;
TP HC NEDC, g/km - tail pipe Total Hydrocarbons (THC) emissions with the given catalyst measured over New European Drive Cycle (NEDC) on a vehicle;
x(HC) NEDC, % - Total Hydrocarbons (THC) conversion over the given catalyst measured over New European Drive Cycle (NEDC) on a vehicle;

Table 3 and Table 4
All abbreviations of Table 3 and 4 were previously used in Tables 1 and 2

Table 5
kNEDC, 1/s - global 1st order rate constant of CO oxidation
All other abbreviations of Table 5 were previously used in Tables 1 and 2

The method of the present invention starts with the assumption that the loss of the efficiency of the high-temperature automotive catalyst is caused, primarily, by the loss of the supported metal as Platinum (Pt) etc. specific surface area due to the catalyst ageing. To confirm this assumption, experiments were carried out with a number of automotive catalysts (D, K, L, G, H, I, J), which consisted in thermal ageing thereof, and measuring their performance and physical characteristics before, during and after ageing.

Ageing experiments were performed on the engine bench. Ageing consisted in carrying out multiple simulations of diesel particulate filter regeneration events, in each of them the high temperature of the exhaust gas was generated downstream of a catalyst by means of fuel combustion inside an engine and/or over the catalyst causing exothermal effect across the catalyst. Typical example of temperature profile seen by catalyst during ageing is given in Figure 1.

Referred to Figure 1, typical temperature profile of a catalyst that was aged on the engine dynamometer is given. Either catalyst internal temperatures or their function, and/or temperature downstream of the catalyst can be used for the purposes of the method of the present invention to calculate the accumulative exposition of the catalyst to thermal ageing conditions i.e. the thermal ageing index.

In order to correlate performance properties versus physical properties of all catalysts, ratios between corresponding initial and aged characteristics were calculated; these ratios are given in Table 1, and Table 2.

**Table 1. Initial/Aged ratios of the corresponding catalyst physical properties**

| Catalyst | D(Pt) XRD, A° | Dav TEM, A° | PtD, % | Sbet, m2/g WC | Vμ, cm3/g WC | Vs, cm3/g WC |
|----------|---------------|-------------|--------|---------------|--------------|--------------|
| D | 0.704 | 0.600 | 1.656 | 0.975 | 0.929 | 1.030 |

(continued)

| Catalyst | D(Pt) XRD, A° | Dav TEM, A° | PtD, % | Sbet, m2/g WC | Vμ, cm3/g WC | Vs, cm3/g WC |
|---|---|---|---|---|---|---|
| K | 0.176 | 0.255 | 8.484 | 1.028 | 1.208 | 0.944 |
| L | 0.296 | 0.240 | 6.420 | 1.068 | 1.026 | 0.961 |
| G * | 0.281 | 0.233 | 5.000 | 1.205 | 1.114 | 1.088 |
| H * | 1.150 | 0.884 | 1.000 | 1.029 | 1.096 | 1.045 |
| I* | 0.750 | 0.909 | 2.262 | 1.098 | 1.310 | 0.887 |
| J * | 0.170 | 0.182 | 8.205 | 1.186 | 1.000 | 1.113 |
| Range | 6.75 | 5.00 | 8.48 | 1.24 | 1.41 | 1.26 |

**Table 2. Initial/Aged ratios of the corresponding catalyst performance properties**

| Catalyst | (-)Shift in T (50%) CO, °C | TP CO NEDC, g/km | x(CO) NEDC, % | TP HC NEDC, g/km | x(HC) NEDC, % |
|---|---|---|---|---|---|
| D | 15 | 0.314 | 2.15 | 0.256 | 1.46 |
| K | 44 | 0.039 | 1.57 | 0.417 | 1.15 |
| L | 48 | 0.095 | 1.86 | 0.552 | 1.09 |
| G * | 43 | 0.220 | 1.99 | 0.334 | 1.33 |
| H * | 5 | 0.935 | 1.62 | 0.862 | 1.33 |
| I * | -5 | 0.909 | 1.32 | 1.075 | 0.88 |
| J * | 46 | 0.090 | 1.84 | 0.226 | 1.42 |
| Range | -9.60 | 23.9 | 1.63 | 4.75 | 1.66 |

One can see that for example Platinum-related properties are changing in a quite large range, while changes in texture characteristics are much smaller.

As a rule, performance characteristics reveal significant changes with ageing, except CO and HC conversions over NEDC, and light-off temperature which is special because preferably shift or difference is used instead of a ratio.

It can be deduced that changes of the performance characteristics are more consistent with Platinum-related properties.

To further illustrate this, correlation coefficients between physical properties and CO performance characteristics are given in Table 3.

One can see that the strongest correlation is that observed between CO performance characteristics, i.e. either light-off temperature shift or tailpipe emissions measured over the NEDC, and Platinum-related properties, i.e. either Platinum crystalline size or Platinum dispersion, in comparison correlations with texture properties are much weaker.

From these results, one can conclude the high importance of the precious metal condition for CO performance.

**Table 3. Correlation coefficients (r) between physical properties and performance characteristics; Ratios Initial/Aged**

| | (-)Shift in T (50%) CO, °C | TP CO NEDC, g/km | x(CO) NEDC, % | TP HC NEDC, g/km | x(HC) NEDC, % |
|---|---|---|---|---|---|
| D Pt XRD, A° | -0.890 | **0.902** | -0.252 | 0.654 | -0.013 |
| Dav Pt TEM, A° | **-0.987** | **0.957** | -0.482 | 0.794 | -0.279 |
| PtD, % | 0.878 | -0.825 | 0.039 | -0.535 | -0.017 |
| SBET | 0.408 | -0.208 | 0.028 | -0.177 | 0.025 |
| Vμ | -0.342 | 0.435 | -0.879 | 0.692 | -0.802 |
| Vs | 0.366 | -0.281 | 0.661 | -0.639 | 0.891 |

To validate the conclusion made above, the absolute values of physical properties and performance characteristics were analysed for experimental set obtained for catalyst C2 consisting of 6 different samples (Table 4, Table 5).

Results are indicating that there's a wide range of change for both Platinum-related properties and the most of the performance characteristics, while there's a smaller range of change for texture properties, light-off temperatures and conversion efficiencies over NEDC (Table 4).

Being in good correspondence with this observation, performance characteristics have clearly the strongest correlation with Platinum-dispersion; and only second order of the influence was found for total pore volume (Vs) (Table 5).

Based on these results, it can be concluded that decreasing of specific surface area of the supported metal, particularly Platinum is the main path of catalysts deactivation towards CO and HC performance; texture changes are of much less importance.

**Table 4. Catalysts C2: Performance characteristics and physical properties of the catalyst**

| Par-r | A | B | C | D | E | F | 1 | 2 | 3 | 4 | 5 | 6 |
|---|---|---|---|---|---|---|---|---|---|---|---|---|
| Sample | D, A° XRD | Dav, TEM | Pt D, % | Sbet, m²/g WC | Vμ, cm³/g | Vs, cm³/g | Tco(50%), °C | TP CO NEDC, g/km | x(CO) NEDC, % | The(50%), °C | TP HC NEDC, g/km | x(HC) NEDC, % |
| G fresh | 40 | 35 | 19 | 100 | 0.044 | 0.481 | 128 | 0.265 | 87.8 | 126 | 0.036 | 89.0 |
| Gaged | 142.5 | 150 | 3.8 | 83 | 0.0395 | 0.442 | 171 | 1.209 | 44.2 | 196 | 0.107 | 66.7 |
| H initial | 365 | 420 | 0.6 | 88 | 0.04 | 0.434 | 210 | 1.734 | 21.5 | 246 | 0.144 | 56.6 |
| H aged | 317.5 | 475 | 0.6 | 86 | 0.0365 | 0.416 | 215 | 1.848 | 13.3 | 241 | 0.166 | 42.4 |
| I initial | 120 | 125 | 3.45 | 84 | 0.038 | 0.419 | 219 | 1.479 | 31.2 | 242 | 0.159 | 46.1 |
| I aged | 160 | 137.5 | 1.15 | 77 | 0.029 | 0.38 | 214 | 1.632 | 23.6 | 234 | 0.148 | 52.1 |
| Range (Max/Min) | 9.13 | 13.6 | 31.7 | 1.30 | 1.52 | 1.27 | 1.71 | 6.97 | 6.60 | 1.95 | 4.67 | 2.10 |

**Table 5. Catalyst C2: correlation coefficients (r) between performance characteristics and physical properties**

|  | kNEDC, 1/s | Tco(50%), °C | TP CO NEDC, g/km | x(CO) NEDC, % | The (50%), °C | TP HC NEDC, g/km | x(HC) NEDC, % |
|---|---|---|---|---|---|---|---|
| D, XRD | -0.596 | 0.625 | 0.782 | -0.767 | 0.704 | 0.647 | -0.593 |
| Dav, TEM | -0.520 | 0.566 | 0.729 | -0.720 | 0.632 | 0.615 | -0.590 |
| Pt D, % | **0.981** | **-0.910** | **-0.976** | **0.974** | **-0.935** | -0.935 | 0.891 |
| Sbet | 0.874 | -0.755 | -0.756 | 0.765 | -0.752 | -0.763 | 0.736 |
| Vμ | 0.605 | -0.672 | -0.634 | 0.652 | -0.606 | -0.645 | 0.641 |
| Vs | 0.770 | -0.851 | -0.804 | 0.817 | -0.800 | -0.829 | 0.819 |

The method of the present invention further continues with the assumption that the loss of the supported metal specific surface area is caused, primarily, by sintering of the supported metal particles.

Kinetics of the supported metals sintering can be accurately correlated with the following equation:

$$dS/dt = -KS^n \qquad \text{(Eq. 1)}$$

where S is exposed surface area of the supported metal, K is rate constant of the sintering process, and the exponent n can change between 2 and 13 dependent upon the rate limiting step of sintering process.

Irrespective of a nature of the rate-determining step of a sintering process, assuming the Arrhenius dependence of sintering rate constant K upon temperature, and no dependence of the K upon time, Eq.1 can be integrated versus time giving Eq.2:

$$[(S_0/S)^{n-1} - 1]/S_o^{n-1} = (n-1)K_0 \, \Sigma_i[\exp(-E/RT_i)\Delta t_i] \qquad \text{(Eq. 2)}$$

or

$$[(S_0/S)^{n-1} - 1]/[(n-1) K_0 S_o^{n-1}] = \Sigma_i[\exp(-E/RT_i)\Delta t_i] \qquad \text{(Eq. 3)}$$

The Eq.3 is the basic equation describing sintering process, and it is preferably the main equation used for interpreting the ageing results for the purposes of the present invention.

Right-hand term in Eq.3 represents sintering conditions. Catalyst's performance results can be plotted and analysed against this parameter, named "thermal ageing index" (Eq.4):

$$TAI = \Sigma_i[\exp(-E/RT_i)*\Delta t_i] \qquad \text{(Eq. 4)}$$

Left-hand term of the Eq.3 contains information on sintering mechanism (n), on the system's ability towards sintering ($K_0$), system's initial status ($S_0$), and results of sintering (S). Under S, either specific surface area of the supported metal, or supported metal dispersion, or any characteristic correlated with the supported metal condition, are meant.

In Figure 2, the correlation between the thermal ageing index and the supported metal dispersion is given, to confirm the assumption that precious metal sintering is one of the main phenomena causing deactivation of the catalysts under conditions of the considered applications. Correlation between thermal ageing index and supported metal dispersion for the catalyst C2 is shown in Figure 2. There is a close correlation between the thermal ageing index and the catalyst property.

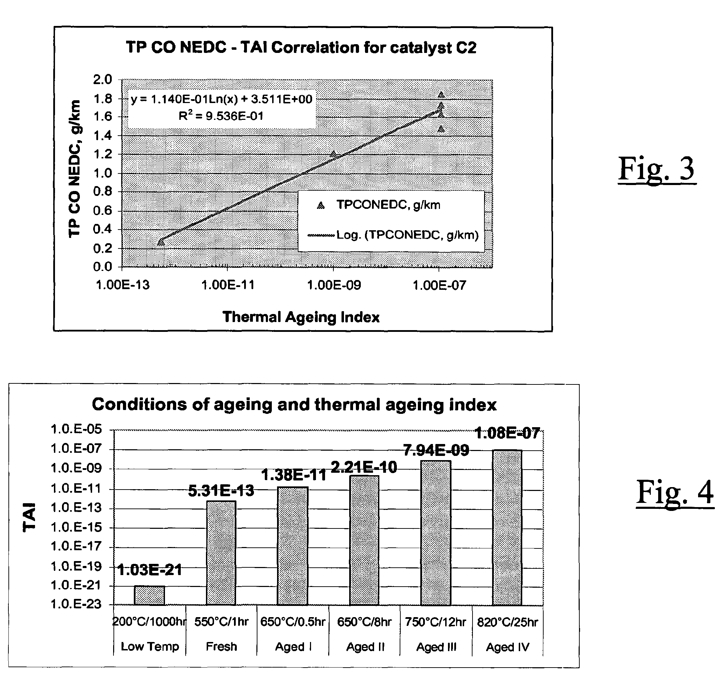

In Figure 3, accumulative tailpipe CO NEDC emissions are plotted versus thermal ageing index, confirming close correlation between temperature pre-history of the catalyst, and performance of the catalyst measured over the legislative drive cycle (NEDC).

Among the catalyst efficiency characteristics, tailpipe CO emission is the one directly related to legislation, and also the one showed the best correlation with supported metal-related properties. Based on this and on the above considerations, tailpipe CO emissions measured over NEDC were taken as a main property characterizing the efficiency of the catalyst, and to be used for the method of the present invention. A correlation of this property with thermal ageing index is given in Figure 3.

General illustration on different conditions of ageing and corresponding thermal ageing index is given at Figure 4. In Figure 4, values of the thermal ageing index are given calculated for different operational conditions of the catalyst. These values are shown to confirm that the disclosed method of evaluating the accumulative exposition of the catalyst to thermal ageing conditions i.e. the thermal ageing index, can be applied directly without using any threshold temperature in order to take into account obviously long operation periods at lower temperatures that can't cause catalyst deactivation via sintering.

Thermal ageing index was calculated with the E/R value, i.e. activation energy of sintering process, specific for a given catalyst, pre-determined or taken from literature. One can see that interval of thermal ageing index between low and high temperature operation conditions is very broad.

Even thousands hours of operation at temperatures about 200°C bring negligible contribution to thermal ageing index.

Due to this, the method of the present invention does not require any threshold temperature to be included for calculation of the thermal ageing index.

Based on the pre-measured correlation between the thermal ageing index and the efficiency of the catalyst (Figure 3), the threshold limiting value of the thermal ageing index is known which corresponds to the threshold (minimally accepted) catalyst efficiency, and also a functional dependence of catalyst efficiency on the thermal ageing index is known (see information in Figure 3).

If the actual value of the thermal ageing index is about reaching or reached the predetermined threshold value, a corresponding decision can be made on-line, and indicator of the catalyst deterioration can be lit on.

If the actual value of the thermal ageing index is lower than the pre-determined threshold value, the pre-determined functional correlation between thermal ageing index and catalyst efficiency (Figure 3) can be applied to estimate actual catalyst efficiency, or catalyst efficiency loss, or percentage of the catalyst efficiency (resources) left can be accurately estimated.

**Claims**

1. Method to estimate the efficiency of a catalyst located in the exhaust path and/or downstream of an internal combustion engine comprising the steps of:

   - monitoring a temperature of the catalyst with at least one temperature sensor over the catalyst operating time;
   - calculating an accumulative exposure of the catalyst to thermal ageing conditions with the measured catalyst temperature;
   - applying a predetermined correlation between the accumulative exposure of the catalyst to the thermal ageing conditions and characteristic of the catalyst performance to estimate the catalyst properties;
   - comparing the accumulative exposure of the catalyst to thermal ageing conditions to a predetermined threshold limit of the thermal ageing conditions,
   - performing indicative measures in case if the actual value of the accumulative exposure of the catalyst to thermal ageing conditions reached and/or exceeded the pre-determined fraction of the pre-determined threshold value, whereby

   the accumulated exposure of the catalyst to thermal ageing conditions (denoted as TAI, "thermal ageing index") is calculated using the equation:

$$TAI = \Sigma_i[e^{(-E/RT_i)} * \Delta t_i]$$

   whereby E/R=activation energy of the sintering process; $T_i$=catalyst temperature over the i-th time interval over the catalyst lifetime and $\Delta t_i$ = length of the i-th interval over catalyst lifetime.

**EP 1 544 431 B1**

**2.** Method according to claim 1,
**characterized in that**,
the parameters of the catalyst temperature are preferably recorded with uniform and small increments over the life of the catalyst.

**3.** Method according to claim 1 or 2,
**characterized in that**,
Catalyst properties are catalyst efficiency and/or actual catalyst efficiency and/or catalyst efficiency loss and/or percentage of the catalyst efficiency (resources) left.


**Patentansprüche**

**1.** Verfahren zur Schätzung des Wirkungsgrads eines Katalysators, der sich im Abgasweg und/oder stromabwärts eines Verbrennungsmotors befindet, umfassend die folgenden Schritte:

- Überwachen einer Temperatur des Katalysators mit mindestens einem Temperatursensor über die Katalysatorbetriebszeit ;
- Berechnen einer sich anhäufenden Einwirkung von Wärmealterungsbedingungen auf den Katalysator mit der gemessenen Katalysatortemperatur;
- Anwenden einer vorbestimmten Korrelation zwischen der sich anhäufenden Einwirkung der Wärmealterungsbedingungen auf den Katalysator und der Kennlinie der Katalysatorleistung, um die Katalysatoreigenschaften zu schätzen;
- Vergleichen der sich anhäufenden Einwirkung der Wärmealterungsbedingungen auf den Katalysator mit einer vorbestimmten Schwellengrenze der Wärmealterungsbedingungen,
- Durchführen anzeigender Maßnahmen, falls der tatsächliche Wert der sich anhäufenden Einwirkung der Wärmealterungsbedingungen auf den Katalysator den vorbestimmten Bruchteil des vorbestimmten Schwellenwerts erreicht und/oder überschritten hat, wobei

die sich anhäufende Einwirkung der Wärmealterungsbedingungen (als TAI, "thermal ageing index" bezeichnet) auf den Katalysator unter Verwendung der Gleichung

$$\mathrm{TAI} \; = \; \sum_i [e^{(-E/RT_i)} * \Delta t_i]$$

berechnet wird, wobei E/R die Aktivierungsenergie des Sinterungsvorgangs ist; $T_i$ die Katalysatortemperatur über das i-te Zeitintervall über die Katalysatorlebensdauer ist und $\Delta t_i$ die Länge des i-ten Intervalls über die Katalysatorlebensdauer ist.

**2.** Verfahren nach Anspruch 1,
**dadurch gekennzeichnet, dass**
die Parameter der Katalysatortemperatur über die Lebensdauer des Katalysators hinweg vorzugsweise mit gleichmäßigen und kleinen Zunahmen aufgezeichnet werden.

**3.** Verfahren nach Anspruch 1 oder 2,
**dadurch gekennzeichnet, dass**
die Katalysatoreigenschaften der Wirkungsgrad des Katalysators und/oder der tatsächliche Wirkungsgrad des Katalysators und/oder der Wirkungsgradverlust des Katalysators und/oder der Prozentsatz des verbliebenen Wirkungsgrads (der verbliebenen Ressourcen) des Katalysators sind.


**Revendications**

**1.** Procédé pour estimer l'efficacité d'un catalyseur situé dans le trajet d'échappement et/ou en aval d'un moteur à combustion interne comprenant les étapes suivantes :

- surveillance d'une température du catalyseur avec au moins une sonde de température sur le temps de fonctionnement du catalyseur ;
- calcul d'une exposition cumulée du catalyseur à des conditions de vieillissement thermique avec la température mesurée du catalyseur ;
- application d'une corrélation prédéterminée entre l'exposition cumulée du catalyseur aux conditions de vieillissement thermique et la caractéristique de performance du catalyseur pour estimer les propriétés du catalyseur ;
- comparaison de l'exposition cumulée du catalyseur aux conditions de vieillissement thermique avec un seuil limite prédéterminé des conditions de vieillissement thermique ;
- mise en oeuvre de mesures indicatives dans le cas où la valeur réelle de l'exposition cumulée du catalyseur aux conditions de vieillissement thermique a atteint et/ou dépassé la fraction prédéterminée de la valeur de seuil prédéterminée, l'exposition cumulée du catalyseur aux conditions de vieillissement thermique (désignée par IVT « Indice de Vieillissement Thermique ») étant calculée à l'aide de l'équation :

$$\mathrm{IVT} \;=\; \sum{}_i \left[ e^{-E/RTi)} * \Delta t_i \right]$$

où E/R désigne l'énergie d'activation du processus de frittage, $T_i$ la température du catalyseur pendant l'intervalle de temps i-th pendant la durée de vie du catalyseur et $\Delta t_i$ la durée de l'intervalle i-th pendant la durée de vie du catalyseur.

2. Procédé selon la revendication 1, **caractérisé en ce que** les paramètres de la température du catalyseur sont de préférence enregistrés avec de petits incréments uniformes pendant la durée de vie du catalyseur.

3. Procédé selon la revendication 1 ou 2, **caractérisé en ce que** les propriétés du catalyseur sont l'efficacité du catalyseur et/ou l'efficacité réelle du catalyseur et/ou la perte d'efficacité du catalyseur et/ou le pourcentage restant (de ressources) d'efficacité du catalyseur.

**Fig. 1**

150-LT Ageing of H739 catalyst: temperature pattern

**Fig. 2**

Pt dispersion - TAI Correlation for catalyst C2

$y = -1.368E+00 Ln(x) - 2.104E+01$
$R^2 = 9.163E-01$

# Fig. 3

**TP CO NEDC - TAI Correlation for catalyst C2**

$y = 1.140E-01Ln(x) + 3.511E+00$
$R^2 = 9.536E-01$

▲ TPCONEDC, g/km
—— Log. (TPCONEDC, g/km)

TP CO NEDC, g/km

2.0
1.8
1.6
1.4
1.2
1.0
0.8
0.6
0.4
0.2
0.0

1.00E-13    1.00E-11    1.00E-09    1.00E-07

Thermal Ageing Index

# Fig. 4

**Conditions of ageing and thermal ageing index**

TAI

1.0.E-05
1.0.E-07
1.0.E-09
1.0.E-11
1.0.E-13
1.0.E-15
1.0.E-17
1.0.E-19
1.0.E-21
1.0.E-23

1.03E-21
5.31E-13
1.38E-11
2.21E-10
7.94E-09
1.08E-07

| 200°C/1000hr | 550°C/1hr | 650°C/0.5hr | 650°C/8hr | 750°C/12hr | 820°C/25hr |
| Low Temp | Fresh | Aged I | Aged II | Aged III | Aged IV |